(19) Europäisches Patentamt
European Patent Office
Office européen des brevets

(11) **EP 2 731 197 A1**

(12) **EUROPEAN PATENT APPLICATION**
published in accordance with Art. 153(4) EPC

(43) Date of publication:
**14.05.2014 Bulletin 2014/20**

(51) Int Cl.:
**H01Q 15/08** (2006.01)

(21) Application number: **11855266.0**

(86) International application number:
**PCT/CN2011/082290**

(22) Date of filing: **16.11.2011**

(87) International publication number:
**WO 2013/004063 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2011 CN 201110183437**
**01.07.2011 CN 201110183474**
**01.07.2011 CN 201110183471**

(71) Applicants:
• **Kuang-Chi Innovative Technology Ltd.**
**ShenZhen, Guangdong 518034 (CN)**
• **Kuang-Chi Institute of Advanced Technology**
**Shenzhen, Guangdong 518057 (CN)**

(72) Inventors:
• **LIU, Ruopeng**
**Shenzhen**
**Guangdong 518057 (CN)**
• **JI, Chunlin**
**Shenzhen**
**Guangdong 518057 (CN)**
• **YUE, Yutao**
**Shenzhen**
**Guangdong 518057 (CN)**

(74) Representative: **Becker Kurig Straus**
**Bavariastrasse 7**
**80336 München (DE)**

(54) **ARTIFICIAL COMPOSITE MATERIAL AND ANTENNA THEREOF**

(57) The present invention relates to a man-made composite material and a man-made composite material antenna. The man-made composite material is disposed in a propagation direction of an electromagnetic wave from a radiation source. A line connecting the radiation source to a point on a first surface of the man-made composite material and a line perpendicular to the man-made composite material form an angle $\theta$ therebetween, which uniquely corresponds to a curved surface in the man-made composite material. Each point on the curved surface to which the angle $\theta$ uniquely corresponds has a same refractive index. A generatrix of the curved surface is a parabolic arc. Refractive indices of the man-made composite material decrease gradually as the angle $\theta$ increases. After passing through the man-made composite material, the electromagnetic wave exits in parallel from a top surface of each annular body. By designing abrupt transitions of the refractive indices of the man-made composite material to follow a curved surface, the refraction, diffraction and reflection at the abrupt transition points can be significantly reduced. As a result, the problems caused by interferences are eased, which further improves performances of the man-made composite material and the man-made composite material antenna.

FIG. 1

**Description**

**FIELD OF THE INVENTION**

The present invention generally relates to the field of electromagnetic technologies, and more particularly, to a man-made composite material and a man-made composite material antenna.

**BACKGROUND OF THE INVENTION**

In conventional optics, a lens can be used to refract a plane wave into a spherical wave which appears to be radiated from a point light source located at a virtual focus of the lens. Currently, the diverging effect of the lens is achieved by virtue of the refractive property of the spherical form of the lens. The inventor has found in the process of making this invention that, the lens antenna has at least the following technical problems: the lens is bulky and heavy, which is unfavorable for miniaturization; performances of the lens rely heavily on the shape thereof, and directional propagation from the antenna can be achieved only when the lens has a precise shape; and serious interferences and losses are caused to the electromagnetic waves, which reduces the electromagnetic energy. Moreover, for most lens antennae, abrupt transitions of the refractive indices follow a simple line that is perpendicular to a lens surface. Consequently, electromagnetic waves propagating through the lenses suffer from considerable refraction, diffraction and reflection, which have a serious effect on the performances of the lenses.

**SUMMARY OF THE INVENTION**

In view of the aforesaid problems that the prior art antennae suffer from considerable refraction, diffraction and reflection and have poor lens performances, an objective of the present invention is to provide a man-made composite material and a man-made composite material antenna that have superior performances.

To achieve the aforesaid objective, the present invention provides a man-made composite material, which is disposed in a propagation direction of a plane electromagnetic wave. The plane electromagnetic wave is incident on a first surface of the man-made composite material and exits in the form of a spherical wave from a second surface of the man-made composite material opposite to the first surface. Reverse extensions of the exiting electromagnetic wave intersect with each other at a virtual focus of the man-made composite material. A line connecting the virtual focus to a point on the second surface of the man-made composite material and a line perpendicular to the man-made composite material form an angle $\theta$ therebetween, which uniquely corresponds to a curved surface in the man-made composite material. A set formed by points having the same angle $\theta$ forms a boundary of the curved surface to which the angle $\theta$ uniquely corresponds. Each point on the curved surface to which the angle $\theta$ uniquely corresponds has a same refractive index. Refractive indices of the man-made composite material increase gradually as the angle $\theta$ increases.

Preferably, a refractive index distribution of the curved surface satisfies:

$$n(\theta) = \frac{1}{S(\theta)} \left[ \frac{(F+d)}{\cos\theta} - (F+d) + n_{\min}d \right],$$

where, $S(\theta)$ is an arc length of a generatrix of the curved surface, F is a distance from the virtual focus to the man-made composite material; $d$ is a thickness of the man-made composite material; and $n_{\min}$ is a minimum refractive index of the man-made composite material.

Preferably, the generatrix of the curved surface is a parabolic arc or an elliptical arc.

Preferably, the arc length $S(\theta)$ of the parabolic arc satisfies:

$$S(\theta) = \frac{d}{2} \left[ \frac{\log(|\tan\theta| + \sqrt{1 + \tan^2\theta}) + \delta}{|\tan\theta| + \delta} + \sqrt{1 + \tan^2\theta} \right],$$

where $\delta$ is a preset decimal.

Preferably, when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of a parabola where the parabolic arc is located is represented as:

$$y(x) = \tan\theta(-\frac{1}{2d}x^2 + x + F + d).$$

Preferably, the angle $\theta$ and each point (x, y) of the parabolic arc satisfy the following relational expression:

$$\theta(x, y) = \tan^{-1}\left[\frac{2dy}{2d(F+d+x)-x^2}\right].$$

Preferably, when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of an ellipse where the elliptical arc is located is represented as:

$$\frac{(x-d)^2}{a^2} + \frac{(y-c)^2}{b^2} = 1;$$

where a, b and c satisfy the following relationships:

$$\frac{d^2}{a^2} + \frac{[(F+d)\tan\theta - c]^2}{b^2} = 1;$$

$$\frac{\sin\theta}{\sqrt{n^2(\theta) - \sin^2(\theta)}} = \frac{b^2}{a^2}\frac{d}{(F+d)\tan\theta - c}.$$

Preferably, a center of the ellipse where the elliptical arc is located is located on the first surface and has coordinates (d, c).

Preferably, a point on the second surface corresponding to the angle $\theta$ has a refraction angle $\theta'$, and a refractive index $n(\theta)$ of the point satisfies:

$$n(\theta) = \frac{\sin\theta}{\sin\theta'}.$$

Preferably, the man-made composite material comprises at least one man-made composite material sheet layer, each of which comprises a sheet-like substrate and a plurality of man-made microstructures attached on the substrate.

To achieve the aforesaid objective, the present invention further provides a man-made composite material antenna, which comprises a radiation source and a man-made composite material disposed in a propagation direction of a plane electromagnetic wave. The plane electromagnetic wave is incident on a first surface of the man-made composite material and exits in the form of a spherical wave from a second surface of the man-made composite material opposite to the first surface. Reverse extensions of the exiting electromagnetic wave intersect with each other at a virtual focus of the man-made composite material. A line connecting the virtual focus to a point on the second surface of the man-made composite material and a line perpendicular to the man-made composite material form an angle $\theta$ therebetween, which uniquely corresponds to a curved surface in the man-made composite material. A set formed by points having the same angle $\theta$ forms a boundary of the curved surface to which the angle $\theta$ uniquely corresponds. Each point on the curved surface to which the angle $\theta$ uniquely corresponds has a same refractive index. Refractive indices of the man-made composite material increase gradually as the angle $\theta$ increases.

Preferably, a refractive index distribution of the curved surface satisfies:

$$n(\theta) = \frac{1}{S(\theta)} \left[ \frac{(F+d)}{\cos\theta} - (F+d) + n_{\min} d \right],$$

where, $S(\theta)$ is an arc length of a generatrix of the curved surface, F is a distance from the virtual focus to the man-made composite material; $d$ is a thickness of the man-made composite material; and $n_{\min}$ is a minimum refractive index of the man-made composite material.

Preferably, the generatrix of the curved surface is a parabolic arc or an elliptical arc.

Preferably, the arc length $S(\theta)$ of the parabolic arc satisfies:

$$S(\theta) = \frac{d}{2} \left[ \frac{\log(|\tan\theta| + \sqrt{1 + \tan^2\theta}) + \delta}{|\tan\theta| + \delta} + \sqrt{1 + \tan^2\theta} \right],$$

where $\delta$ is a preset decimal.

Preferably, when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of a parabola where the parabolic arc is located is represented as:

$$y(x) = \tan\theta \left( -\frac{1}{2d} x^2 + x + F + d \right).$$

Preferably, the angle $\theta$ and each point (x, y) of the parabolic arc satisfy the following relational expression:

$$\theta(x, y) = \tan^{-1} \left[ \frac{2dy}{2d(F + d + x) - x^2} \right].$$

Preferably, when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of an ellipse where the elliptical arc is located is represented as:

$$\frac{(x-d)^2}{a^2} + \frac{(y-c)^2}{b^2} = 1;$$

where a, b and c satisfy the following relationships:

$$\frac{d^2}{a^2} + \frac{\left[(F+d)\tan\theta - c\right]^2}{b^2} = 1;$$

$$\frac{\sin\theta}{\sqrt{n^2(\theta) - \sin^2(\theta)}} = \frac{b^2}{a^2}\frac{d}{(F+d)\tan\theta - c}.$$

Preferably, a center of the ellipse where the elliptical arc is located is located on the first surface and has coordinates (d, c).

Preferably, a point on the second surface corresponding to the angle $\theta$ has a refraction angle $\theta$, and a refractive index $n(\theta)$ of the point satisfies:

$$n(\theta) = \frac{\sin\theta}{\sin\theta'}.$$

Preferably, the man-made composite material comprises at least one man-made composite material sheet layer, each of which comprises a sheet-like substrate and a plurality of man-made microstructures attached on the substrate.

The technical solutions of the present invention have the following benefits: by designing abrupt transitions of the refractive indices of the man-made composite material to follow a curved surface, the refraction, diffraction and reflection at the abrupt transition points can be significantly reduced. As a result, the problems caused by interferences are eased, which further improves performances of the man-made composite material and the man-made composite material antenna.

## BRIEF DESCRIPTION OF THE DRAWINGS

To describe the technical solutions of embodiments of the present invention more clearly, the attached drawings necessary for description of the embodiments will be introduced briefly hereinbelow. Obviously, these attached drawings only illustrate some of the embodiments of the present invention, and those of ordinary skill in the art can further obtain other attached drawings according to these attached drawings without making inventive efforts. In the attached drawings:

FIG. 1 is a schematic view illustrating a diverging effect of a man-made composite material according to an embodiment of the present invention on an electromagnetic wave;
FIG. 2 is a schematic view illustrating a form of a curved surface in the man-made composite material 10 shown in FIG. 1 to which an angle $\theta$ uniquely corresponds;
FIG. 3 is a side view of the man-made composite material 10 shown in FIG. 2;
FIG. 4 is a schematic view illustrating an arc shown in FIG. 3;
FIG. 5 is a schematic view illustrating variations of refractive indices;
FIG. 6 is a schematic view illustrating coordinates of the arc shown in FIG. 3 when being a parabolic arc;
FIG. 7 is a schematic view illustrating coordinates of the arc shown in FIG. 3 when being an elliptical arc; and
FIG. 8 is a diagram illustrating the refractive index distribution in a yx plane.

**DETAILED DESCRIPTION OF THE INVENTION**

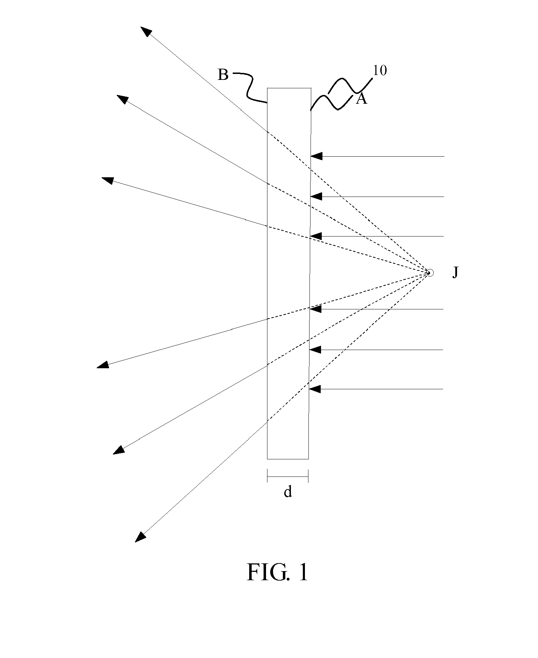

FIG. 1 is a schematic view illustrating a diverging effect of a man-made composite material 10 according to an embodiment of the present invention on an electromagnetic wave. The man-made composite material 10 is disposed in a propagation direction of an electromagnetic wave emitted from a radiation source. The plane electromagnetic wave is incident on a first surface A of the man-made composite material and exits in the form of a spherical wave from a second surface B of the man-made composite material opposite to the first surface A. Reverse extensions of the exiting electromagnetic wave intersect with each other at a virtual focus J of the man-made composite material.

As can be known as a common sense, the refractive index of the electromagnetic wave is proportional to $\sqrt{\varepsilon \times \mu}$ . When an electromagnetic wave propagates from a medium to another medium, the electromagnetic wave will be refracted; and if the refractive index distribution in the material is non-uniform, then the electromagnetic wave will be deflected towards a site having a larger refractive index. By designing electromagnetic parameters of the man-made composite material at each point, the refractive index distribution of the man-made composite material can be adjusted so as to achieve the purpose of changing the propagating path of the electromagnetic wave.

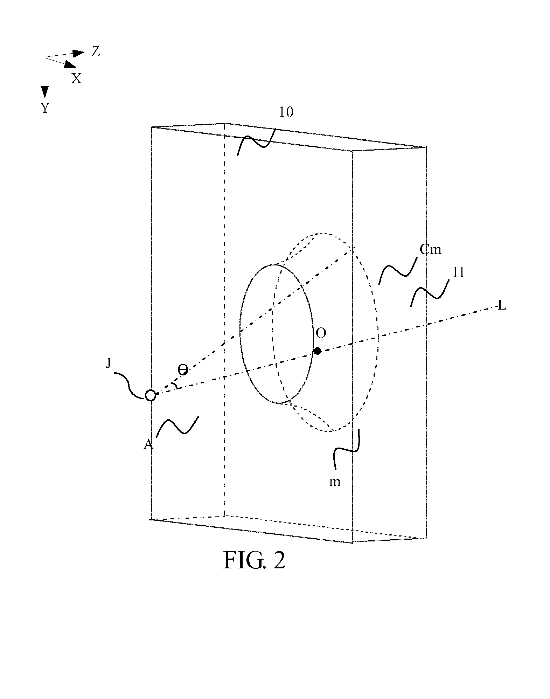

FIG. 2 is a schematic view illustrating a form of a curved surface in the man-made composite material 10 shown in FIG. 1 to which an angle $\theta$ uniquely corresponds. As shown, a line connecting the virtual focus J to a point on the second surface B (the surface opposite to the surface A) of the man-made composite material 10 and a line passing through a center O of the first surface A of the man-made composite material 10 and perpendicular to the man-made composite material 10 form an angle $\theta$ therebetween, which uniquely corresponds to a curved surface Cm in the man-made composite material 10. A set formed by points having the same angle $\theta$ forms a boundary (shown as a circle 11) of the curved surface Cm to which the angle $\theta$ uniquely corresponds. Each point on the curved surface Cm to which the angle $\theta$ uniquely corresponds has a same refractive index. A generatrix of the curved surface is an arc m. Refractive indices of the man-made composite material 10 increase gradually as the angle $\theta$ increases.

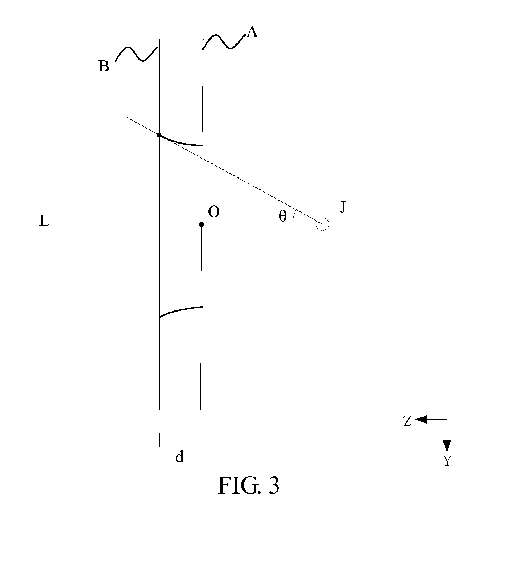

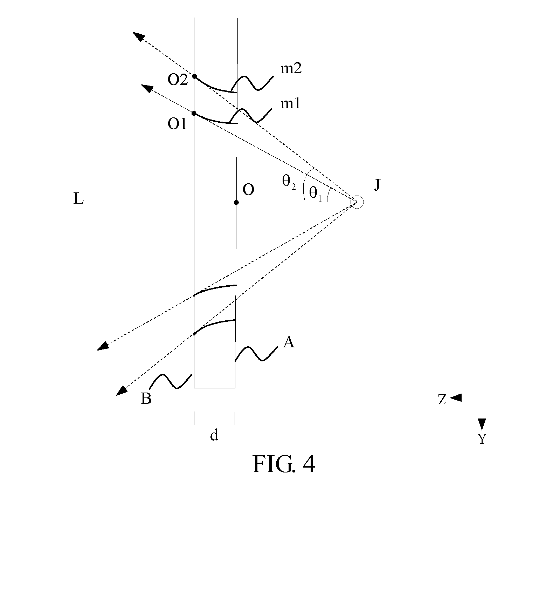

As shown in FIG. 2, the generatrix of the curved surface Cm is the arc m, and the curved surface Cm is obtained through rotation of the arc m about a line L. FIG. 3 is a side view of the man-made composite material 10. The thickness of the man-made composite material 10 is as shown by d, and L represents a line perpendicular to the man-made composite material. A side cross-sectional view of a curved surface having a same refractive index is in the form of two arcs, which are symmetrical with respect to the line L. Each of the arcs shown by a solid line is a generatrix of a virtual curved surface in the man-made composite material 10. In order to more clearly describe that refractive indices on a same curved surface are identical to each other, the virtual curved surface (which does not exist actually, and is elucidated only for convenience of description) in the man-made composite material will be also elucidated. As shown in FIG. 4, a line connecting the radiation source to a point O1 on the second surface B of the man-made composite material and the line L passing through the center O of the first surface and perpendicular to the man-made composite material 10 form an angle $\theta_1$ therebetween, which corresponds to an arc ml; and each point on a virtual curved surface which is obtained through rotation of the arc ml has a same refractive index. Likewise, a line connecting the radiation source to a point 02 on the second surface of the man-made composite material and the line L form an angle $\theta_2$ therebetween, which corresponds to an arc m2; and each point on a virtual curved surface which is obtained through rotation of the arc m2 has a same refractive index.

A refractive index distribution of the virtual curved surface satisfies:

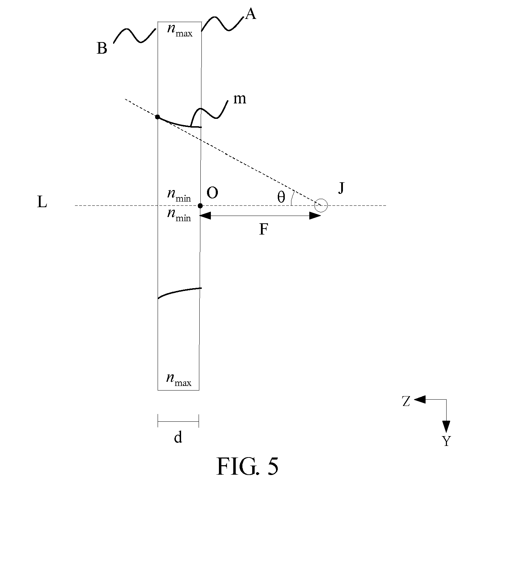

$$n(\theta) = \frac{1}{S(\theta)}\left[\frac{(F+d)}{\cos\theta} - (F+d) + n_{min}d\right].$$ As shown in FIG. 5, S($\theta$) is an arc length of the generatrix (the arc m) of the virtual curved surface, F is a distance from the virtual focus J to the man-made composite material 10, $d$ is a thickness of the man-made composite material 10, $n_{min}$ is a minimum refractive index of the man-made composite material, and $n_{max}$ is a maximum refractive index of the man-made composite material.

Hereinbelow, a case in which the arc m is a parabolic arc and a case in which the arc m is an elliptical arc will be respectively illustrated as an example.

Supposing that the arc m is a parabolic arc, then the arc length $S(\theta)$ of the parabolic arc m satisfies the following equation:

$$S(\theta) = \frac{d}{2}\left[\frac{\log(|\tan\theta| + \sqrt{1 + \tan^2\theta}) + \delta}{|\tan\theta| + \delta} + \sqrt{1 + \tan^2\theta}\right],$$

where $\delta$ is a preset decimal (e.g., 0.0001), and can ensure that the ratio $\dfrac{\log(|\tan\theta| + \sqrt{1+\tan^2\theta}) + \delta}{|\tan\theta| + \delta}$ converges when the angle $\theta$ approaches to 0. The angle $\theta$ ranges between $[0, \dfrac{\pi}{2})$.

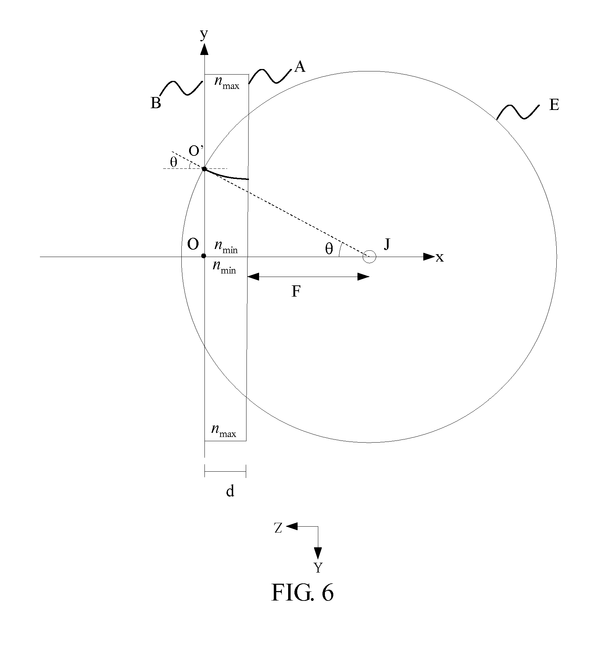

As shown in FIG. 6, when the line L passing through the center O of the second surface of the man-made composite material 10 and perpendicular to the man-made composite material 10 is taken as an abscissa axis and a line passing through the center O of the second surface of the man-made composite material 10 and parallel to the second surface is taken as an ordinate axis, a line connecting the virtual focus J to a certain point O' on the surface B and the X axis form an angle $\theta$ therebetween. The angle $\theta$ and each point (x, y) of the parabolic arc satisfy the following relational expression:

$$\theta(x, y) = \tan^{-1}\left[\frac{2dy}{2d(F+d+x) - x^2}\right].$$

Suppose that an equation of a parabola where the parabolic arc m shown by a solid line is located is: $y(x) = ax^2 + bx + c$. The parabola passes through a point (0, $(F + d)\tan\theta$ ); i.e., $y(0) = c = (F + d)\tan\theta$. In order to make the electromagnetic wave propagate in a direction of the designed parabola, a tangent line of the parabolic arc must be parallel with the X axis when the electromagnetic wave propagates through the first surface A of the man-made composite material; i.e., it must be ensured that $y'(d) = 0$. Because $y'(x) = 2ax + b$, $y'(d) = 2ad + b = 0$. In addition, it must also be ensured that the electromagnetic wave propagates in a tangent direction corresponding to the angle $\theta$ when reaching the second surface B of the man-made composite material, so $y'(0) = \tan\theta$. An exit direction of the electromagnetic wave at any point O' on the surface B is a direction of a radius JO' in a sphere E with the virtual focus J as a circle center, i.e., a direction perpendicular to a surface of the sphere E. It can be derived from the aforesaid conditions that the equation of the parabola is $y(x) = \tan\theta(-\dfrac{1}{2d}x^2 + x + F + d)$. Thereby, a relational expression between the angle

$\theta$ and each point (x, y) on the parabolic arc m can be obtained as $\theta(x, y) = \tan^{-1}\left[\dfrac{2dy}{2d(F+d+x) - x^2}\right]$.

The angle $\theta$ uniquely corresponds to a curved surface in the man-made composite material, which is obtained through rotation of the generatrix m about the line L (the X axis); and each point on the curved surface to which the angle $\theta$ uniquely corresponds has a same refractive index.

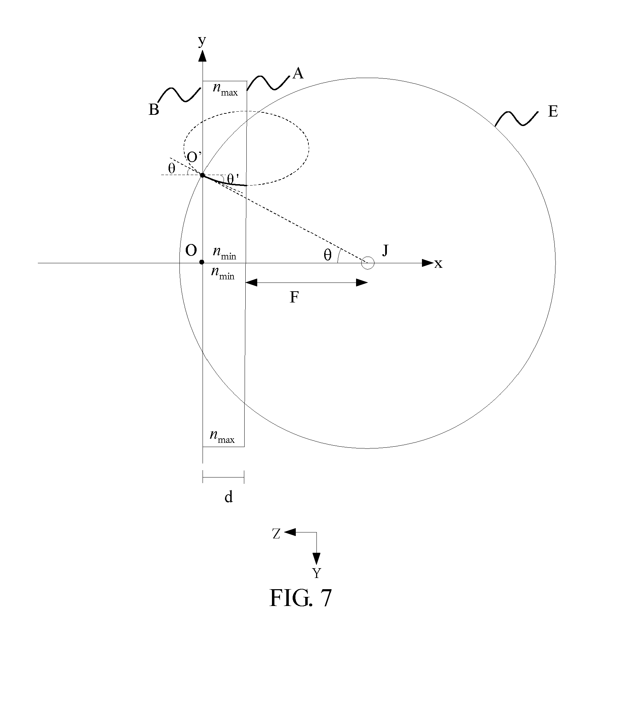

Suppose that the arc m is an elliptical arc. As shown in FIG. 7, when the line L passing through the center O of the second surface of the man-made composite material 10 and perpendicular to the man-made composite material 10 is taken as an abscissa axis and the line passing through the center O of the second surface of the man-made composite material 10 and parallel to the second surface is taken as an ordinate axis, a line connecting the virtual focus J to any point O' on the surface B and the X axis form an angle $\theta$ therebetween. An equation of an ellipse where the elliptical arc m shown by a solid line on the ellipse is located is: $\dfrac{(x-d)^2}{a^2} + \dfrac{(y-c)^2}{b^2} = 1$. A center of the ellipse is located on the first surface A, and has coordinates (d, c). The ellipse passes through a point (0, $(F+d)\tan\theta$); i.e., $y(0)=$

$(F+d)\tan\theta$. Through the equation of the ellipse, it can be obtained that $\dfrac{d^2}{a^2} + \dfrac{[(F+d)\tan\theta - c]^2}{b^2} = 1$. When a plane wave is incident on the man-made composite material, a tangent line of the electromagnetic wave on the elliptical arc of the first surface A of the man-made composite material must be parallel with the X axis; i.e., it must be ensured that $y'(d)=0$. A tangential equation at any point (x, y) on the ellipse is $\dfrac{dy}{dx} = -\dfrac{b^2}{a^2}\dfrac{x-d}{y-c}$, so it can be obtained that

y'(*d*) = 0. An exit direction of the electromagnetic wave at any point O' on the surface B is a direction of a radius JO' in a sphere E with the virtual focus J as a circle center, i.e., a direction perpendicular to a surface of the sphere E.

The point O' on the second surface B corresponding to the angle $\theta$ has a refraction angle $\theta$ and a refractive index n($\theta$); and it can be known from the Snell's law that $n(\theta) = \dfrac{\sin\theta}{\sin\theta'}$. The electromagnetic wave propagates in a tangent direction corresponding to the refraction angle $\theta$ when reaching the second surface B of the man-made composite material 10 from the external (as shown in FIG. 6). That is, at a point where the elliptical arc m infinitely approaches to the point O', y'(0⁺) = tanθ'. Thereby, the following relational expressions can be obtained:

$$ y'(0^{+}) = \tan\theta' = \frac{\sin\theta}{\sqrt{n^2(\theta) - \sin^2(\theta)}} = \frac{b^2}{a^2}\frac{d}{(F+d)\tan\theta - c} \quad ; $$

$$ \frac{\sin\theta}{\sqrt{n^2(\theta) - \sin^2(\theta)}} = \frac{b^2}{a^2}\frac{d}{(F+d)\tan\theta - c} \quad . $$

The angle $\theta$ uniquely corresponds to a curved surface in the man-made composite material, which is obtained through rotation of the generatrix m about the line L (the X axis); and each point on the curved surface to which the angle $\theta$ uniquely corresponds has a same refractive index.

It shall be appreciated that, when a=b in the ellipse, the ellipse becomes a true circle; and in this case, the corresponding elliptical arc becomes a circular arc, and the curved surface is formed through rotation of the circular arc about the line L (the X axis).

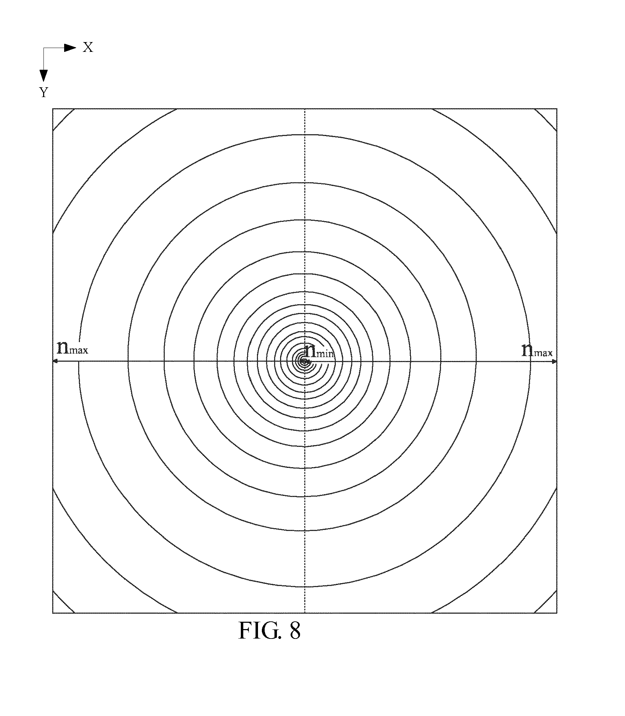

The man-made composite material can be used to convert a plane wave emitted from the radiation source into a spherical wave. Refractive indices of the man-made composite material increase from $n_{min}$ to $n_{max}$ as the angle $\theta$ increases, as shown in FIG. 8. A segment of the parabolic arc shown by a solid line on the parabola is a generatrix of a virtual curved surface, and refractive indices on a same curved surface are identical to each other. It shall be appreciated that, the man-made composite material of the present invention may also be used to convert a spherical wave into a plane wave (i.e., a case reversed from what is shown in FIG. 1) without the need of changing the construction of the man-made composite material. Therefore, various applications adopting the principle of the present invention shall all fall within the scope of the present invention.

In practical structure designs, the man-made composite material may be designed to be formed by a plurality of man-made composite material sheet layers, each of which comprises a sheet-like substrate and a plurality of man-made microstructures or man-made pore structures attached on the substrate. The overall refractive index distribution of the plurality of man-made composite material sheet layers combined together must satisfy or approximately satisfy the aforesaid equations so that refractive indices on a same curved surface are identical to each other, and the generatrix of the curved surface is designed as a parabolic arc. Of course, in practical designs, it may be relatively difficult to design the generatrix of the curved surface as an accurate parabolic arc or an accurate elliptical arc, so the generatrix of the curved surface may be designed as an approximate parabolic arc, an approximate elliptical arc or a stepped form as needed and degrees of accuracy may be chosen as needed. With continuous advancement of the technologies, the designing manners are also updated continuously, and there may be a better designing process for the man-made composite material to achieve the refractive index distribution provided by the present invention.

Each of the man-made microstructures is a two-dimensional (2D) or three-dimensional (3D) structure comprising a metal wire and having a geometric pattern, and may be of, for example but is not limited to, a cross shape, a 2D snowflake shape or a 3D snowflake shape. The metal wire may be a copper wire or a silver wire, and may be attached on the substrate through etching, electroplating, drilling, photolithography, electron etching or ion etching. The plurality of man-made microstructures in the man-made composite material make the refractive indices of the man-made composite material increase with the angle $\theta$ increases. Given that an incident electromagnetic wave is known, by appropriately designing topology patterns of the man-made microstructures and designing arrangement of the man-made microstructures of different dimensions within an electromagnetic wave converging component, the refractive index distribution of the man-made composite material can be adjusted to convert the plane electromagnetic wave into an electromagnetic wave diverging in the form of a spherical wave.

In order to more intuitively represent the refractive index distribution of each of the man-made composite material sheet layers in a YX plane, the units that have the same refractive index are connected to form a line, and the magnitude of the refractive index is represented by the density of the lines. A higher density of the lines represents a larger refractive index. The refractive index distribution of the man-made composite material satisfying all of the above relational expressions is as shown in FIG. 8.

The present invention has been elucidated in detail by taking the parabolic arc and the elliptical arc as examples. As a non-limiting example, the present invention may further apply to other kinds of curves such as irregular curves. The cases satisfying the refractive index distribution principle of the present invention shall all fall within the scope of the present invention.

The present invention further provides a man-made composite material antenna. Apart from the man-made composite material 10 as shown in FIG. 1 and FIG. 2, the man-made composite material antenna further comprises a radiation source disposed at a side of the man-made composite material 10. The structure and the refractive index variations of the man-made composite material 10 have been described above, and thus will not be further described herein.

The aforesaid man-made composite material may be in the form shown in FIG. 2, and of course, may also be made into other desired forms such as an annular form so long as the aforesaid refractive index variation rules can be satisfied.

In practical applications, in order to achieve better performances of the man-made composite material and reduce the reflection, an impedance matching layer may be disposed at each of two sides of the man-made composite material. Details of the impedance matching layer can be found in the prior art documents, and thus will not be further described herein.

By designing abrupt transitions of the refractive indices of the man-made composite material to follow a curved surface according to the present invention, the refraction, diffraction and reflection at the abrupt transition points can be significantly reduced. As a result, the problems caused by interferences are eased, which further improves performances of the man-made composite material.

The embodiments of the present invention have been described above with reference to the attached drawings; however, the present invention is not limited to the aforesaid embodiments, and these embodiments are only illustrative but are not intended to limit the present invention. Those of ordinary skill in the art may further devise many other implementations according to the teachings of the present invention without departing from the spirits and the scope claimed in the claims of the present invention, and all of the implementations shall fall within the scope of the present invention.

## Claims

1. A man-made composite material, being disposed in a propagation direction of a plane electromagnetic wave, wherein the plane electromagnetic wave is incident on a first surface of the man-made composite material and exits in the form of a spherical wave from a second surface of the man-made composite material opposite to the first surface; and reverse extensions of the exiting electromagnetic wave intersect with each other at a virtual focus of the man-made composite material;
a line connecting the virtual focus to a point on the second surface of the man-made composite material and a line perpendicular to the man-made composite material form an angle $\theta$ therebetween, which uniquely corresponds to a curved surface in the man-made composite material, a set formed by points having the same angle $\theta$ forms a boundary of the curved surface to which the angle $\theta$ uniquely corresponds; each point on the curved surface to which the angle $\theta$ uniquely corresponds has a same refractive index; and refractive indices of the man-made composite material increase gradually as the angle $\theta$ increases.

2. The man-made composite material of claim 1, wherein a refractive index distribution of the curved surface satisfies:

$$n(\theta) = \frac{1}{S(\theta)}\left[\frac{(F+d)}{\cos\theta} - (F+d) + n_{min}d\right],$$

where, S($\theta$) is an arc length of a generatrix of the curved surface, F is a distance from the virtual focus to the man-made composite material; $d$ is a thickness of the man-made composite material; and $n_{min}$ is a minimum refractive index of the man-made composite material.

3.  The man-made composite material of claim 2, wherein the generatrix of the curved surface is a parabolic arc or an elliptical arc.

4.  The man-made composite material of claim 3, wherein the arc length S($\theta$) of the parabolic arc satisfies:

$$S(\theta) = \frac{d}{2}\left[\frac{\log(|\tan\theta| + \sqrt{1 + \tan^2\theta}) + \delta}{|\tan\theta| + \delta} + \sqrt{1 + \tan^2\theta}\right],$$

where $\delta$ is a preset decimal.

5.  The man-made composite material of claim 4, wherein when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of a parabola where the parabolic arc is located is represented as:

$$y(x) = \tan\theta(-\frac{1}{2d}x^2 + x + F + d).$$

6.  The man-made composite material of claim 5, wherein the angle $\theta$ and each point (x, y) of the parabolic arc satisfy the following relational expression:

$$\theta(x, y) = \tan^{-1}\left[\frac{2dy}{2d(F + d + x) - x^2}\right].$$

7.  The man-made composite material of claim 3, wherein when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of an ellipse where the elliptical arc is located is represented as:

$$\frac{(x - d)^2}{a^2} + \frac{(y - c)^2}{b^2} = 1;$$

where a, b and c satisfy the following relationships:

$$\frac{d^2}{a^2} + \frac{[(F + d)\tan\theta - c]^2}{b^2} = 1;$$

$$\frac{\sin\theta}{\sqrt{n^2(\theta)-\sin^2(\theta)}}=\frac{b^2}{a^2}\frac{d}{(F+d)\tan\theta-c}.$$

**8.** The man-made composite material of claim 7, wherein a center of the ellipse where the elliptical arc is located is located on the first surface and has coordinates (d, c).

**9.** The man-made composite material of claim 7, wherein a point on the second surface corresponding to the angle $\theta$ has a refraction angle $\theta'$, and a refractive index $n(\theta)$ of the point satisfies:

$$n(\theta)=\frac{\sin\theta}{\sin\theta'}.$$

**10.** The man-made composite material of claim 2, wherein the man-made composite material comprises at least one man-made composite material sheet layer, each of which comprises a sheet-like substrate and a plurality of man-made microstructures attached on the substrate, and each of the man-made microstructures is a two-dimensional (2D) or three-dimensional (3D) structure comprising at least one metal wire and having a geometric pattern, and is of an I shape, a cross shape, or an elliptical shape.

**11.** A man-made composite material antenna, comprising a radiation source and a man-made composite material disposed in a propagation direction of a plane electromagnetic wave, wherein the plane electromagnetic wave is incident on a first surface of the man-made composite material and exits in the form of a spherical wave from a second surface of the man-made composite material opposite to the first surface; and reverse extensions of the exiting electromagnetic wave intersect with each other at a virtual focus of the man-made composite material; a line connecting the virtual focus to a point on the second surface of the man-made composite material and a line perpendicular to the man-made composite material form an angle $\theta$ therebetween, which uniquely corresponds to a curved surface in the man-made composite material, a set formed by points having the same angle $\theta$ forms a boundary of the curved surface to which the angle $\theta$ uniquely corresponds; each point on the curved surface to which the angle $\theta$ uniquely corresponds has a same refractive index; and refractive indices of the man-made composite material increase gradually as the angle $\theta$ increases.

**12.** The man-made composite material antenna of claim 11, wherein a refractive index distribution of the curved surface satisfies:

$$n(\theta)=\frac{1}{S(\theta)}\left[\frac{(F+d)}{\cos\theta}-(F+d)+n_{min}d\right],$$

where, $S(\theta)$ is an arc length of a generatrix of the curved surface, F is a distance from the virtual focus to the man-made composite material; $d$ is a thickness of the man-made composite material; and $n_{min}$ is a minimum refractive index of the man-made composite material.

**13.** The man-made composite material antenna of claim 12, wherein the generatrix of the curved surface is a parabolic arc or an elliptical arc.

**14.** The man-made composite material antenna of claim 13, wherein the arc length $S(\theta)$ of the parabolic arc satisfies:

$$S(\theta) = \frac{d}{2}\left[\frac{\log(|\tan\theta| + \sqrt{1 + \tan^2\theta}) + \delta}{|\tan\theta| + \delta} + \sqrt{1 + \tan^2\theta}\right],$$

where $\delta$ is a preset decimal.

**15.** The man-made composite material antenna of claim 14, wherein when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of a parabola where the parabolic arc is located is represented as:

$$y(x) = \tan\theta\left(-\frac{1}{2d}x^2 + x + F + d\right).$$

**16.** The man-made composite material antenna of claim 15, wherein the angle $\theta$ and each point (x, y) of the parabolic arc satisfy the following relational expression:

$$\theta(x, y) = \tan^{-1}\left[\frac{2dy}{2d(F + d + x) - x^2}\right].$$

**17.** The man-made composite material antenna of claim 13, wherein when a line passing through a center of the second surface of the man-made composite material and perpendicular to the man-made composite material is taken as an abscissa axis and a line passing through the center of the second surface of the man-made composite material and parallel to the second surface is taken as an ordinate axis, an equation of an ellipse where the elliptical arc is located is represented as:

$$\frac{(x - d)^2}{a^2} + \frac{(y - c)^2}{b^2} = 1;$$

where a, b and c satisfy the following relationships:

$$\frac{d^2}{a^2} + \frac{[(F + d)\tan\theta - c]^2}{b^2} = 1;$$

$$\frac{\sin\theta}{\sqrt{n^2(\theta) - \sin^2(\theta)}} = \frac{b^2}{a^2}\frac{d}{(F + d)\tan\theta - c}.$$

**18.** The man-made composite material antenna of claim 17, wherein a center of the ellipse where the elliptical arc is located is located on the first surface and has coordinates (d, c).

19. The man-made composite material antenna of claim 17, wherein a point on the second surface corresponding to the angle $\theta$ has a refraction angle $\theta$, and a refractive index $n(\theta)$ of the point satisfies:

$$n(\theta) = \frac{\sin\theta}{\sin\theta'}.$$

20. The man-made composite material antenna of claim 12, wherein the man-made composite material comprises at least one man-made composite material sheet layer, each of which comprises a sheet-like substrate and a plurality of man-made microstructures attached on the substrate, and each of the man-made microstructures is a 2D or 3D structure having a geometric pattern, and is of a cross shape or a snowflake shape.

FIG. 1

FIG. 2

FIG. 3

FIG. 4

FIG. 5

FIG. 6

FIG. 7

FIG. 8

# INTERNATIONAL SEARCH REPORT

| | International application No. |
|---|---|
| | **PCT/CN2011/082290** |

### A. CLASSIFICATION OF SUBJECT MATTER

H01Q 15/08 (2006.01) i

According to International Patent Classification (IPC) or to both national classification and IPC

### B. FIELDS SEARCHED

Minimum documentation searched (classification system followed by classification symbols)

IPC: H01Q; H01P

Documentation searched other than minimum documentation to the extent that such documents are included in the fields searched

Electronic data base consulted during the international search (name of data base and, where practicable, search terms used)

CNABS; CNTXT; CNKI: metamaterial, artificial material, artificial composite material, antenna, refractive index, spherical wave, virtual focus

VEN; IEEE: metamaterial, meta w material, antenna, refractive w index, spherical, virtual w focus

### C. DOCUMENTS CONSIDERED TO BE RELEVANT

| Category* | Citation of document, with indication, where appropriate, of the relevant passages | Relevant to claim No. |
|---|---|---|
| A | WO 2008110775 A1 (SANDS HOWARD SIMON), 18 September 2008 (18.09.2008), the whole document | 1-20 |
| A | WO 2010050666 A1 (KOREA ELECTRONICS TELECOMM.), 06 May 2010 (06.05.2010), the whole document | 1-20 |
| A | CN 101459270 A (TSINGHUA UNIVERSITY), 17 June 2009 (17.06.2009), the whole document | 1-20 |
| A | US 2007014006 A1 (RIKEN), 18 January 2007 (18.01.2007), the whole document | 1-20 |
| A | WO 2006023195 A2 (UNIV. CALIFORNIA), 02 March 2006 (02.03.2006), the whole document | 1-20 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 March 2012 (29.03.2012) | **12 April 2012 (12.04.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**ZHANG, Xi**<br><br>Telephone No.: (86-10) **62411531** |

Form PCT/ISA/210 (second sheet) (July 2009)

## INTERNATIONAL SEARCH REPORT
### Information on patent family members

| | International application No. |
|---|---|
| | **PCT/CN2011/082290** |

| Patent Documents referred in the Report | Publication Date | Patent Family | Publication Date |
|---|---|---|---|
| WO 2008110775 A1 | 18.09.2008 | EP 2171695 A1 | 07.04.2010 |
| | | US 2010148050 A1 | 17.06.2010 |
| WO 2010050666 A1 | 06.05.2010 | KR 20100046579 A | 07.05.2010 |
| | | KR 20100083759 A | 22.07.2010 |
| | | KR 100994129 B1 | 15.11.2010 |
| | | US 2011199273 A1 | 18.08.2011 |
| CN 101459270 A | 17.06.2009 | None | |
| US 2007014006 A1 | 18.01.2007 | JP 2006350232 A | 28.12.2006 |
| | | US 7532397 B2 | 12.05.2009 |
| | | JP 4669744 B2 | 13.04.2011 |
| WO 2006023195 A2 | 02.03.2006 | EP 1771756 A2 | 11.04.2007 |
| | | KR 20070050051 A | 14.05.2007 |
| | | JP 2008507733 A | 13.03.2008 |
| | | US 2008165079 A1 | 10.07.2008 |
| | | WO 2006023195 A3 | 30.10.2008 |
| | | CN 101389998 A | 18.03.2009 |
| | | US 7538946 B2 | 26.05.2009 |
| | | US 2010067091 A1 | 18.03.2010 |
| | | JP 4795344 B2 | 19.10.2011 |
| | | US 8040586 B2 | 18.10.2011 |
| | | JP 2011254482 A | 15.12.2011 |
| | | US 2011317275 A1 | 29.12.2011 |

Form PCT/ISA/210 (patent family annex) (July 2009)